# EUROPEAN PATENT SPECIFICATION

(11) **EP 1 400 737 B1**
(45) Date of publication and mention of the grant of the patent: **12.03.2008**
(21) Application number: 03019718.0
(22) Date of filing: 29.08.2003
(51) Int. Cl.: F16K 11/06

(54) **Single-drive thermostatic cartridge construction**
Thermostatische Kartusche mit einem Hebel
Cartouche thermostatique à commande unique

(30) Priority: 18.09.2002 IT MI20021991
(43) Date of publication of application: 24.03.2004
(73) Proprietor: CRS S.P.A., 28010 Fontaneto D'Agogna, NO (IT)
(72) Inventor: Gyozo, Janos Baky, 28060 Cureggio (Novara) (IT)
(74) Representative: Cicogna, Franco

(56) References cited:
- EP-A- 1 236 939
- DE-A- 10 006 375
- DE-A- 10 037 470
- DE-A- 10 133 041
- DE-A- 19 716 307
- US-A- 4 610 393

## Description

### BACKGROUND OF THE INVENTION

The present invention relates to a single-drive thermostatic cartridge construction.

In conventional faucets including a single-drive thermostatic cartridge, the opening and closing movements are performed before mixing water.

In the above prior cartridge constructions, because of an impossibility of providing accurate tolerances on the ceramics elements, it is not possible to provide a simultaneous closure or shut-off of the two water flows.

The documents US-A-4 610 393 and DE-A-19 716 307 both disclose a single-drive thermostatic cartridge in which, however, the ceramic control discs do not only perform flow control on mixed water.

### SUMMARY OF THE INVENTION

Accordingly, the aim of the present invention is to provide such a single-drive thermostatic cartridge construction, which overcomes the above mentioned drawbacks of prior art cartridges.

Within the scope of the above mentioned aim, a main object of the present invention is to provide such a thermostatic cartridge construction, allowing to perform a closure on the mixed water flow, as mixed by thermostatic means.

Yet another object of the present invention is to provide such a thermostatic cartridge construction of long duration and very reliable in operation.

According to one aspect of the present invention, the above mentioned aim and objects, as well as yet other objects, which will become more apparent hereinafter, are achieved by a single-drive thermostatic cartridge construction according to claim 1.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative but not limitative example, in the accompanying drawings, where:

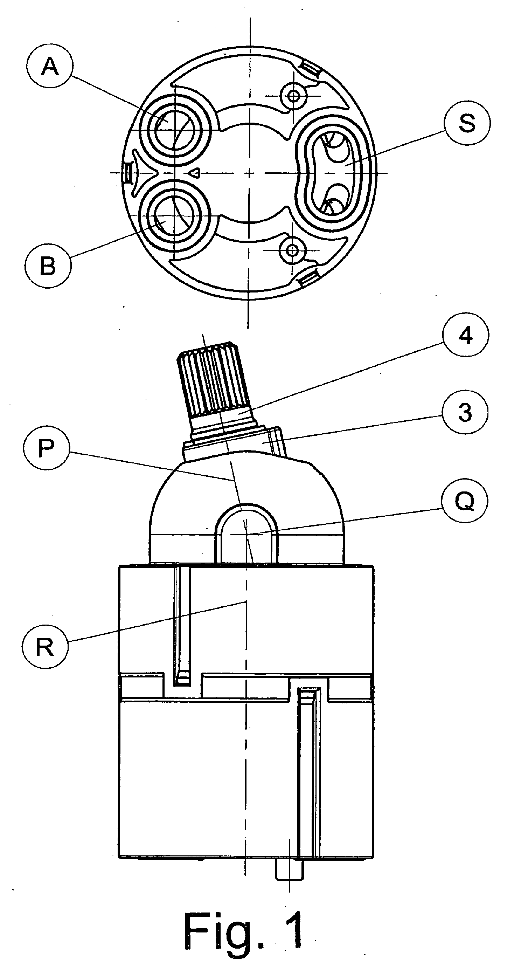

Figure 1 is respectively a side and rear view of the cartridge;
Figure 2 is an exploded view thereof;

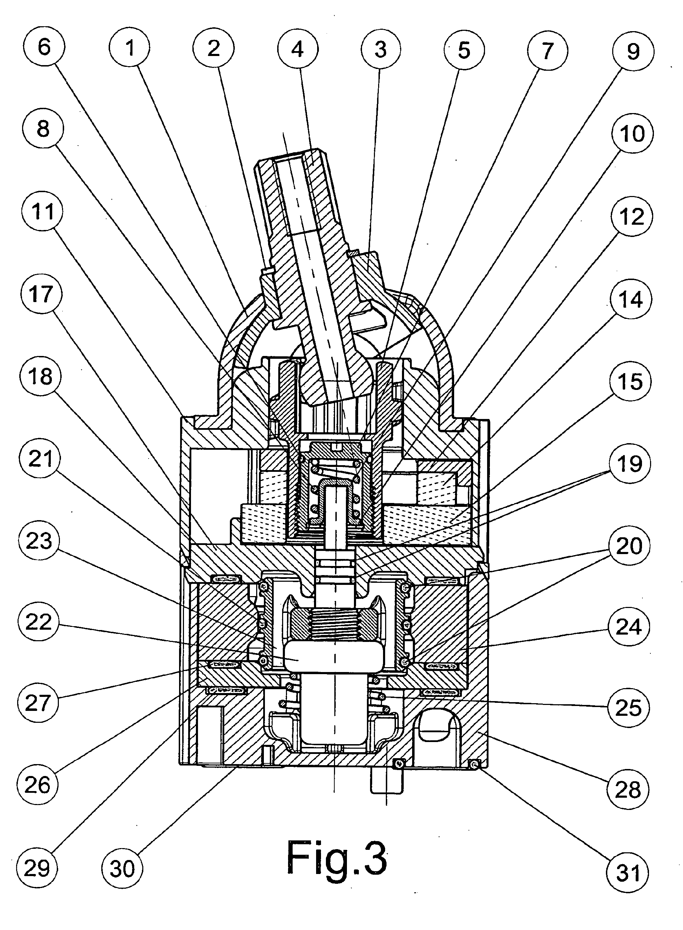

Figure 3 is a main cross-sectional view of the cartridge;

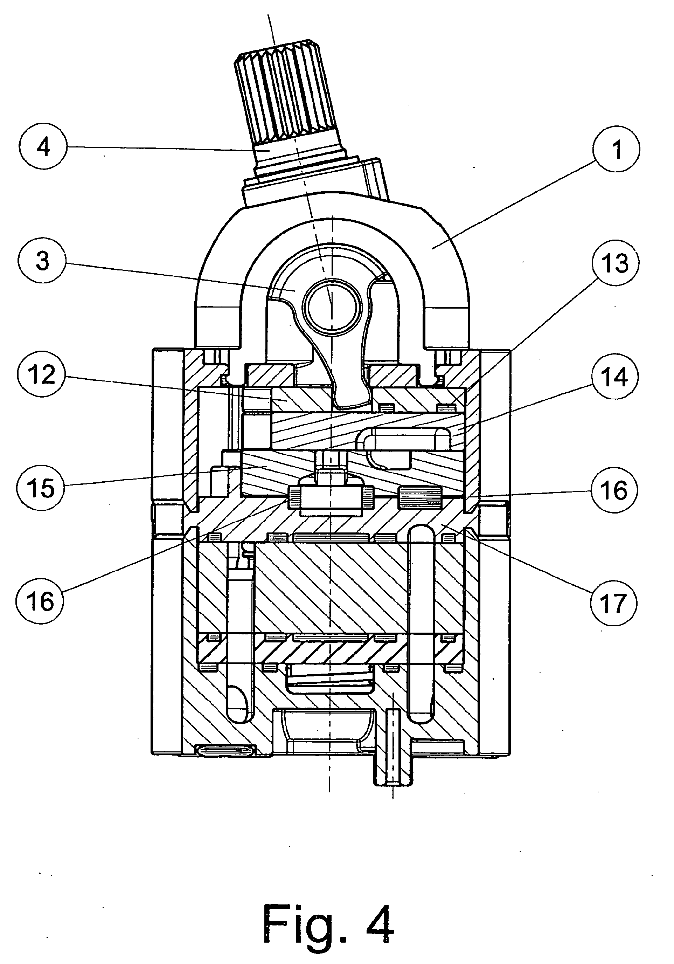

Figure 4 is a schematic view of the cartridge at a closure position thereof;
Figure 5 is a schematic view of the fixed ceramics disc;
Figure 6 is a further schematic view of the movable ceramics disc;
Figure 7 is a further schematic view illustrating the pair of fixed and movable ceramics discs in a closure or closing position thereof;
Figure 8 is a further schematic view of the pair of the fixed and movable ceramics discs in an opening condition thereof; and
Figure 9 is an exploded view illustrating the cold, hot and mixed water flows or streams.

### DESCRIPTION OF THE PREFERRED EMBODIMENTS

With reference to the number references of the above mentioned figures, the cartridge construction, according to the present invention, comprises a cold water inlet A, a hot water inlet B and a mixed water outlet S.

The cartridge construction defines a structural axis R and a further axis Q, perpendicular to the axis R, thereabout a lever guiding member 3 turns; a further axis P, perpendicular to the axis Q, thereabout a lever 4 turns, said lever being locked on said lever guide element 3 by a Seeger ring 2, inside a casing 1.

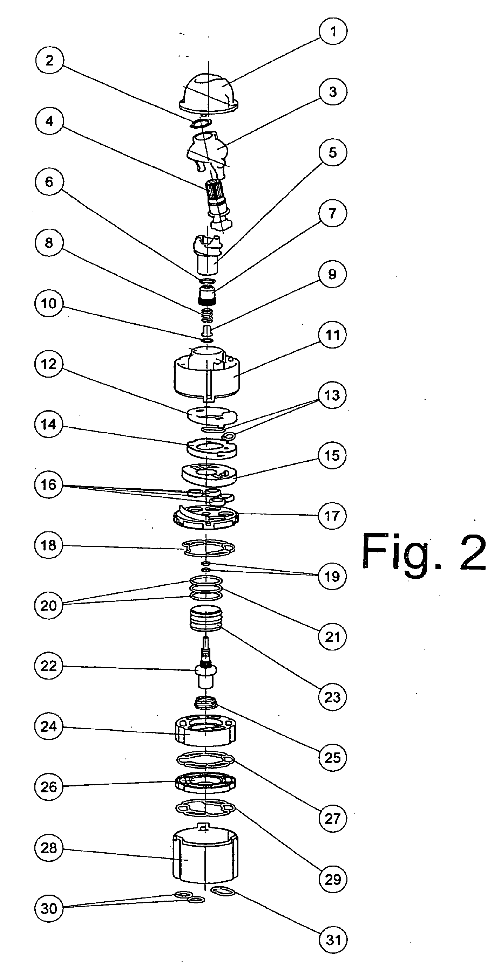

As shown, the cartridge (see figure 2) holds therein a body 28 and, in its inside, separating elements, respectively comprising a top plate 17, a central plate 24 and a bottom plate 26.

Moreover, a thermostatic element 22 is herein provided.

The separating elements are coupled to respective gaskets or seals 18, 27, 29.

The position of the temperature adjusting piston element 23 is defined by the temperature of mixed water and by the manual adjustment performed on the cartridge.

The reference number 9 shows a spring guiding element for guiding a spring 8, whereas the reference number 10 shows a Seeger ring element, for locking said spring guiding element 9.

The adjustment operation is performed as follows.

The operation of the thermostatic bulb 22, of the temperature adjusting piston element 23, of the top spring 8 and bottom spring 25 is of a conventional type, whereas the manual adjustment is performed as follows.

By causing the lever 4 to rotate about its rotary axis P, the rotary movement is transmitted, through a cardan type of coupling, to the adjuster 5.

The latter is coupled, by a threaded coupling, to a top fixed portion 11, thereby a rotary movement will cause the adjuster 5 to be translated along the axis R.

Owing to the provision of the above mentioned cardan joint, the axial movement of the adjuster 5 would not hinder the movement of the lever 4.

As shown, the adjuster element 5 comprises, through an interposition of an O-ring 6, a calibrating element 7, which is coupled to said adjuster element by a threaded coupling.

The calibrating element 7, in particular, can be adjusted by a screw driver, engaged through a hole of said lever 4.

The opening and closing operations are performed as hereinbelow disclosed.

By causing the lever 4 to turn about the rotary axis Q, the lever guiding element 3 is in turn rotated about said axis Q.

Said lever guiding element 3, in particular, comprises two small wings arranged under the rotary center, which engage in suitable recesses of the ceramics stop or holder element 12.

Thus, as the lever guiding element 3 is rotated, the mentioned wings will longitudinally drive said ceramics holder 12, which is in turn coupled to the movable ceramics disc 14, having a bottom portion 14a and a top portion 14b.

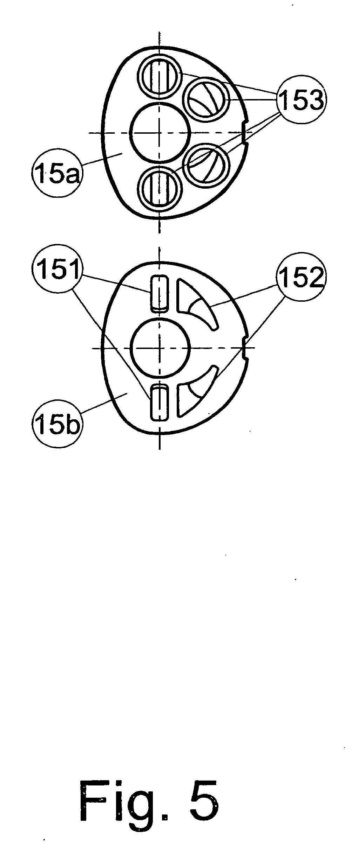

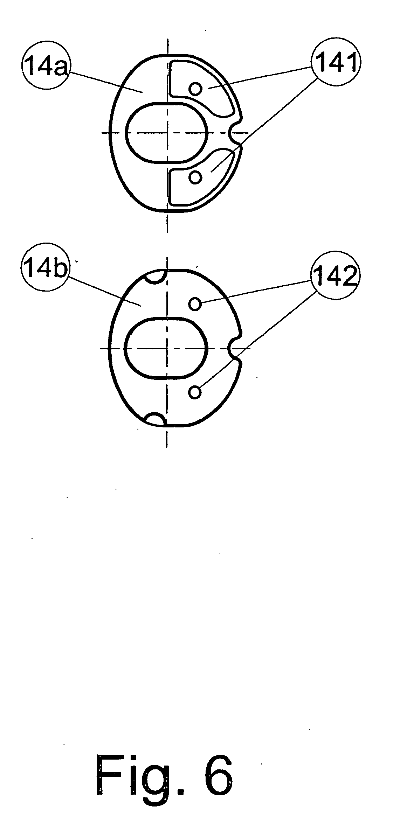

More specifically, the movable ceramics disc 14 comprises two flow-rate adjusting cavities 141 and respective water holes 142 (figure 6) for guiding the water stream. As shown, the movable ceramics disc 14 bears on the fixed ceramics disc 15 which comprises two inlets 151 and two outlets 152 (figure 5).

The fixed ceramics disc 15 comprises, moreover, a bottom portion 15a and a top portion 15b, and seal or gasket seats 153.

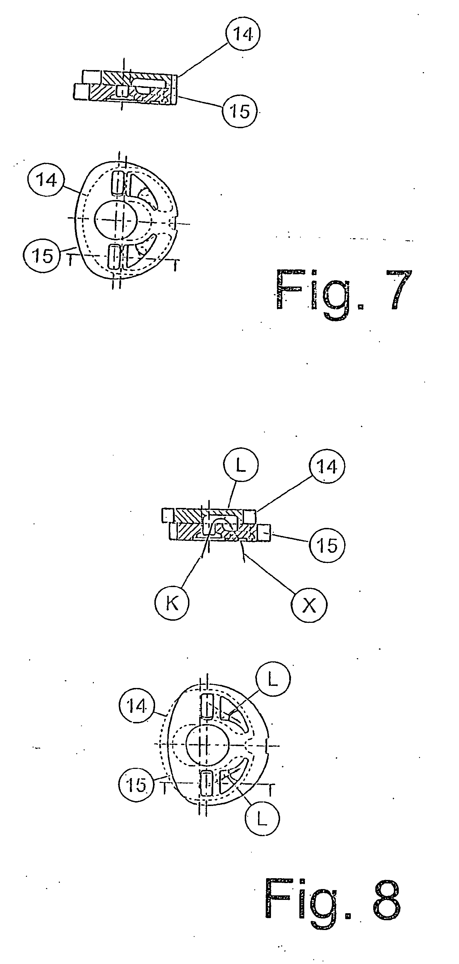

The position of the movable ceramics disc 14, with respect to the fixed ceramics disc 15, will define the passage area between the two ceramics elements and, accordingly, the inlet flow rate K and outlet flow rate x (see figure 8).

The reference numbers 13, 16, 19, 20, 21, 27, 29, 30 and 31 indicate respectively seals or gaskets arranged between the cartridge component elements.

In figure 7, the movable ceramics disc 14 is located in its closing or closure position, since no passage is provided from the inlet to the outlet.

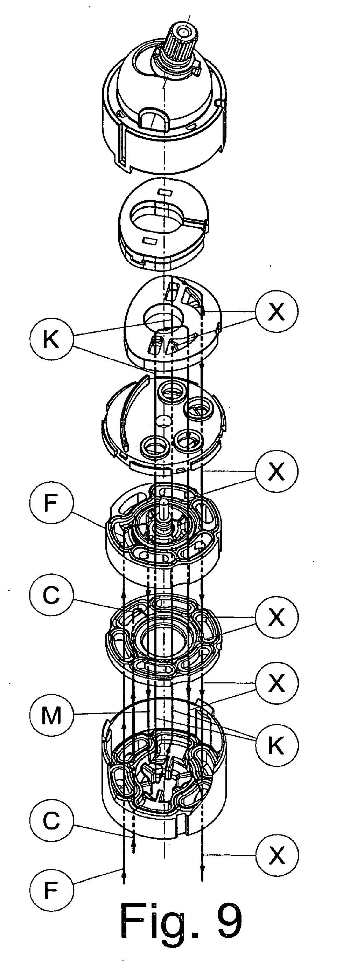

With reference to figure 9, the cartridge according to the present invention operates as follows.

The cold water flow or steam F enters the hole A, passes through the bottom portion 28, the bottom plate 26 and central plate 24, and enters the region between the central plate 24 and top plate 17 where it will affect the piston 23.

Between the piston 23 and top plate 17, the water flow will reverse its movement direction, thereby returning toward the piston 23 so as to arrive at the bottom portion 28.

The hot water flow C, on the other hand, enters the hole B, passes through the bottom portion 28 and bottom plate 26, and between the bottom plate 26 and central plate 24 arriving at the piston element 23: between the bottom portion of the piston 23 and bottom plate 26 it will reverse its movement direction, thereby returning towards the bottom portion 28.

At said bottom portion 28, the hot and cold water will be mixed, thereby providing a mixed water flow M, which is directed according to raising directions K.

More specifically, the water flows K will pass through the bottom plate 26, the central plate 24 and top plate 17 and will enter the fixed ceramics disc 15 and movable ceramics disc 14 which will provide either opening or closing movements, depending on the displacements thereof.

The mixed water will descend with water mixed flows X, through the fixed ceramics disc 15, the top plate 17, central plate 24, bottom plate 26 and bottom portion 28 and will exit the hole S.

It has been found that the invention fully achieves the intended aim and objects.

In fact, the invention provides a single drive thermostatic cartridge construction, in which the water mixing means comprise the bulb 22 and piston element 23.

The movement of the movable ceramics disc on the fixed ceramics disc is exclusively used for performing the opening and closing movements, whereas during the water temperature adjusting operation, the ceramics disc does not perform any movements.

The lever 4 does not perform a reciprocating translating movement, but it performs a rotary movement about the rotary axis Q.

In particular, the lever 4 performs two rotary movements: one about the axis P and the other, with the lever holder or supporting element 3, about the axis Q.

The rotary movement about the axis P will cause, though the cardanic joint, a rotary movement of the adjuster 5 about the axis P.

The coupling point of the cardanic joint corresponds to the crossing of the axes P, Q and R.

Thus, the rotary movement of the lever 4, with respect to the axis P, would not interfere against the rotary movement of the lever holder 3, and does not cause any displacements of the movable ceramics disc.

The rotary movement of the lever supporting or holding element with respect to the axis Q, on the other hand, does not generate any rotary movement of the adjuster 5.

Thus, the opening-closing and adjusting movements will be fully separated from one another.

An important feature of the present invention is that the opening and closing movements are performed on already mixed water, differently from prior art cartridges in which this occurs before mixing.

In the above mentioned prior cartridges, because of an impossibility of providing accurate tolerances on the ceramics components, it is not possible to provide a simultaneously shut-off of the two water flows.

In practicing the invention, the used materials, as well as the size and configurations of the cartridge component elements, could be any, depending on requirements and the status of the art.

## Claims

1. A single-drive thermostatic cartridge construction, comprising a cold water inlet (A), a hot water inlet (B), a mixed water outlet (S), water mixing means, a movable ceramics disc (14) bearing on a fixed ceramics disc (15), said movable ceramics disc (14) being movable on said fixed ceramics disc (15) exclusively for performing water flow opening and closing movements on already mixed water as controlled by a control lever (4) capable of performing a rotary movement about first and second axes (P, Q), and a temperature control thermostatic bulb (22), said cartridge construction further comprising a temperature adjusting piston (23), the position of which is determined by the mixed water temperature and by manual adjusting means operated by said control lever (4) via an adjusting element (5) coupled to said lever (4) by a cardanic connection, said adjusting element (5) including therein a calibrating element (7) which can be adjusted by a screwdriver engageable in a hole formed in said lever, and said lever is locked to a lever guiding element (3) comprising two wing elements engaged in recesses of a ceramics holder element (12) coupled to said movable ceramics disc (14), thereby, as said lever guiding element (3) is turned, said wing elements will longitudinally displace said ceramic holder element (12), said movable ceramics disc (14) comprising a bottom portion (14a), a top portion (14b), two water flow rate adjusting cavities (141), and respective pressure water holes (142), and that said fixed ceramics disc comprises a bottom portion (15a), a top portion (15b) and gasket seats (153).

2. A cartridge construction, according to claim 1, whereby said cartridge construction comprises a body (28) with inner separating elements, respectively comprising a top plate (17), a central plate (24) and a bottom plate (26), therethrough the thermostatic bulb (22) is arranged.

3. A cartridge construction, according to claim 1, whereby said adjusting element (5) is threadedly coupled to a top fixed portion (11), thereby as said lever is rotated, said adjuster is caused to axially translate a translating axis (R) thereof.

4. A cartridge construction, according to or more of the preceding claims, whereby said fixed ceramics disc (15) has two water inlets (151) and outlets (152).

5. A cartridge construction, according to one or more of the preceding claims, whereby the position of said movable ceramics disc (14) with respect to said fixed ceramics disc (15) defines the water passage area between said two ceramics discs (14, 15) and, accordingly, an inlet (K) and outlet (X) water flow.

6. A cartridge construction, according to one or more of the preceding claims, whereby said cold water flow enters said inlet hole (A), passes through said bottom portion (28), bottom plate (26) and central plate (24), and enters a region between said central plate (24), and top plate (17), thereby affecting said piston (23), between said piston and top plate, said water flow reversing its movement direction, thereby turning toward said piston (23) and arriving at said bottom portion (28).

7. A cartridge construction, according to one or more of the preceding claims, whereby said hot water flow enters said inlet hole (B), passes through said bottom portion (28) and bottom plate (26), and between said bottom plate (26) and central plate (24) arrives at said piston (23), where, between the bottom portion of said piston (23) and said bottom plate (26) reverses its movement direction, thereby returning toward said bottom portion (28).

8. A cartridge construction, according to one or more of the preceding claims, whereby in said bottom portion (28), said cold and hot water are mixed thereby providing a mixed water flow.

9. A cartridge construction, according to one or more of the preceding claims, whereby said mixed water passes through said fixed ceramics disc (15), said top plate (17), central plate (24), bottom plate (26) and bottom portion (28), thereby exiting said mixed water outlet (S).

10. A cartridge construction, according to one or more of the preceding claims, whereby the rotary movement of said control lever about said first axis (P) provides, through said cardanic joint, a rotary movement on said adjuster (5) about said first axis (P), the rotary movement of the lever (4) about said first axis (P) being such as not to interfere against the rotary movement of the lever holder (12), and not to cause any displacement of the movable ceramics disc (14).

11. A cartridge construction, according to one or more of the preceding claims, whereby the rotary movement of said lever holder element (12) about said second axis (Q), does not cause said adjusting element (5) to rotate, thereby said opening-closing movements and adjusting movements are fully separated from one another.

## Patentansprüche

1. Thermostatische Kartusche mit einem Hebel, umfassend einen Kaltwassereinlass (A) einen Heißwassereinlass (B), einen Mischwasserauslass (S), ein Wassermischmittel, eine bewegliche Keramikscheibe (14), die auf einer festen Keramikscheibe (15) ruht, wobei die bewegliche Keramikscheibe (14) durch einen Steuerhebel (4), der zur Durchführung einer Drehbewegung um eine erste und eine zweite Achse (P, Q) fähig ist, gesteuert ausschließlich zur Durchführung von Wasserstromöffnungs- und -schließbewegungen an bereits gemischtem Wasser auf der festen Keramikscheibe (15) beweglich ist, und einen thermostatischen Temperatursteuerungskolben (22), wobei die Kartusche ferner einen Temperaturregulierungskolben (23) umfasst, dessen Position durch die Mischwassertemperatur und durch ein manuelles Einstellmittel, das durch den Steuerhebel (4) über ein Einstellelement (5) betätigt wird, welches durch eine Kardanverbindung mit dem Hebel (4) gekoppelt ist, bestimmt wird, wobei das Einstellelement (5) ein Kalibrierungselement (7) enthält, das mit einem Schraubenzieher, der in eine im Hebel ausgebildete Öffnung eingreifen kann, eingestellt werden kann, und wobei der Hebel an ein Hebelführungselement (3) gesperrt ist, das zwei Flügelelemente umfasst, die in Vertiefungen eines mit der beweglichen Keramikscheibe (14) gekoppelten Keramik-Halteelements (12) in Eingriff gebracht sind, wodurch die Flügelelemente beim Drehen des Hebelführungselements (3) das Keramik-Halteelement (12) in der Längsrichtung verschieben werden, wobei die bewegliche Keramikscheibe (14) einen unteren Abschnitt (14a), einen oberen Abschnitt (14b), zwei Wasserfließgeschwindigkeitsregulierungshohlräume (141) und jeweilige Druckwasserlöcher (142) umfasst, und wobei die feste Keramikscheibe einen unteren Abschnitt (15a), einen oberen Abschnitt (15b) und Dichtungssitze (153) umfasst.

2. Kartusche nach Anspruch 1, wobei die Kartusche einen Körper (28) mit inneren Trennelementen umfasst, die jeweils eine obere Platte (17), eine mittlere Platte (24) und eine untere Platte (26) umfassen, durch die hindurchgehend der thermostatische Kolben (22) angeordnet ist.

3. Kartusche nach Anspruch 1, wobei das Einstellelement (5) verschraubt mit einem oberen festen Abschnitt (11) gekoppelt ist, wodurch der Einsteller beim Drehen des Hebels dazu gebracht wird, eine Versetzungsachse (R) davon axial zu versetzen.

4. Kartusche nach einem oder mehreren der vorhergehenden Ansprüche, wobei die feste Keramikscheibe (15) zwei Wassereinlässe (151) und -auslässe (152) aufweist.

5. Kartusche nach einem oder mehreren der vorhergehenden Ansprüche, wobei die Position der beweglichen Keramikscheibe (14) in Bezug auf die feste Keramikscheibe (15) den Wasserdurchgangsbereich zwischen den beiden Keramikscheiben (14, 15), und demgemäß einen Einlass-(K) und einen Auslasswasserstrom (X), definiert.

6. Kartusche nach einem oder mehreren der vorhergehenden Ansprüche, wobei der Kaltwasserstrom die Einlassöffnung (A) betritt, durch den unteren Abschnitt (28), die untere Platte (26) und die mittlere Platte (24) verläuft, und einen Bereich zwischen der mittleren Platte (24) und der oberen Platte (17) betritt, wodurch der Kolben (23) beeinflusst wird, wobei der Wasserstrom zwischen dem Kolben und der oberen Platte seine Bewegungsrichtung umkehrt und sich **dadurch** zum Kolben (23) wendet und zum unteren Abschnitt (28) gelangt.

7. Kartusche nach einem oder mehreren der vorhergehenden Ansprüche, wobei der Heißwasserstrom die Einlassöffnung (B) betritt, durch den unteren Abschnitt (28) und die untere Platte (26) verläuft, und zwischen der unteren Platte (26) und der mittleren Platte (24) zum Kolben (23) gelangt, wo er seine Bewegungsrichtung zwischen dem unteren Abschnitt des Kolbens (23) und der unteren Platte (26) umkehrt und **dadurch** zum unteren Abschnitt (28) zurückkehrt.

8. Kartusche nach einem oder mehreren der vorhergehenden Ansprüche, wobei das kalte und das heiße Wasser im unteren Abschnitt (28) gemischt werden, wodurch ein Mischwasserstrom bereitgestellt wird.

9. Kartusche nach einem oder mehreren der vorhergehenden Ansprüche, wobei das Mischwasser durch die feste Keramikscheibe (15), die obere Platte (17), die mittlere Platte (24), die untere Platte (26) und den unteren Abschnitt (28) verläuft, wodurch es durch den Mischwasserauslass (S) austritt.

10. Kartusche nach einem oder mehreren der vorhergehenden Ansprüche, wobei die Drehbewegung des Steuerhebels um die erste Achse (P) durch das Kardangelenk eine Drehbewegung am Einsteller (5) um die erste Achse (P) bereitstellt, wobei die Drehbewegung des Hebels (4) um die erste Achse (P) von einer solchen Art ist, dass sie die Drehbewegung des Hebelhalters (12) nicht stört, und keinerlei Verschiebung der beweglichen Keramikscheibe (14) verursacht.

11. Kartusche nach einem oder mehreren der vorhergehenden Ansprüche, wobei die Drehbewegung des Hebelhalteelements (12) um die zweite Achse (Q) keine Drehung des Einstellelements (5) verursacht, wodurch die Öffnungs- und Schließ-Bewegungen und die Einstellbewegungen vollständig voneinander getrennt sind.

## Revendications

1. Construction de cartouche thermostatique à commande unique, comprenant une entrée d'eau froide (A), une entrée d'eau chaude (B), une sortie d'eau mélangée (S), un moyen de mélange d'eau, un disque en céramique mobile (14) reposant sur un disque en céramique fixe (15), ledit disque en céramique mobile (14) pouvant être déplacé sur ledit disque en céramique fixe (15) exclusivement pour appliquer des mouvements de fermeture et d'ouverture de l'écoulement d'eau sur de l'eau déjà mélangée, commandé par un levier de commande (4) en mesure de réaliser un mouvement rotatif autour de premier et deuxième axes (P, Q), et un réservoir thermostatique de commande de température (22), ladite construction de cartouche comprenant en outre un piston de réglage de la température (23), dont la position est déterminée par la température de l'eau mélangée et par un moyen de réglage manuel activé par ledit levier de commande (4) par l'intermédiaire d'un élément de réglage (5) couplé audit levier (4) par une connexion à cardan, ledit élément de réglage (5) comportant un élément d'étalonnage (7) pouvant être réglé avec un tournevis pouvant s'engager dans un trou ménagé dans ledit levier, et ledit levier est verrouillé sur un élément de guidage de levier (3) comprenant deux éléments à ailettes engagés dans des évidements d'un élément de support en céramique (12) couplé audit disque en céramique mobile (14), pour que, lorsque ledit élément de guidage de levier (3) est tourné, lesdits éléments à ailettes déplacent dans le sens longitudinal ledit élément de support en céramique (12), ledit disque en céramique mobile (14) comprenant un partie inférieure (14a), une partie supérieure (14b), deux cavités de réglage du débit de l'eau (141), et des orifices destinés au passage de l'eau sous pression respectifs (142), et en ce que ledit disque en céramique fixe comprend une partie inférieure (15a), une partie supérieure (15b) et des sièges d'étanchéité (153).

2. Construction de cartouche selon la revendication 1, ladite construction de cartouche comprenant un corps (28) doté d'éléments de séparation internes, comprenant respectivement une plaque supérieure (17), une plaque centrale (24) et une plaque inférieure (26), entre lesquelles est agencé le réservoir thermostatique (22).

3. Construction de cartouche selon la revendication 1, dans laquelle ledit élément de réglage (5) est couplé par taraudage à une partie fixe supérieure (11), de telle sorte que, lorsque ledit levier est mis en rotation, ledit dispositif de réglage est amené à conférer un mouvement de translation axial à un axe de translation (R) de celui-ci.

4. Construction de cartouche selon l'une quelconque des revendications précédentes, dans laquelle ledit disque en céramique fixe (15) possède deux entrées d'eau (151) et des sorties (152).

5. Construction de cartouche, selon l'une quelconque des revendications précédentes, dans laquelle la position dudit disque en céramique mobile (14) par rapport audit disque en céramique fixe (15) définit la zone de passage d'eau entre lesdits deux disques en céramique (14, 15) et par conséquent, un écoulement d'eau d'entrée (K) et de sortie (X).

6. Construction de cartouche selon l'une quelconque des revendications précédentes, dans laquelle ledit écoulement d'eau froide entre dans ledit trou d'entrée (A), traverse ladite partie inférieure (28), ladite plaque inférieure (26) et ladite plaque centrale (24), et entre dans une région située entre ladite plaque centrale (24) et ladite plaque supérieure (17), affectant ainsi ledit piston (23), entre ledit piston et ladite plaque supérieure, ledit écoulement d'eau inversant son sens de déplacement, tournant ainsi vers ledit piston (23) et arrivant au niveau de ladite partie inférieure (28).

7. Construction de cartouche selon l'une quelconque des revendications précédentes, dans laquelle ledit écoulement d'eau chaude entre dans ledit trou d'entrée (B), traverse ladite partie inférieure (28) et ladite plaque inférieure (26), et entre ladite plaque inférieure (26) et ladite plaque centrale (24), arrive au niveau dudit piston (23) où, entre la partie inférieure dudit piston (23) et ladite plaque inférieure (26), inverse son sens de déplacement, retournant ainsi vers ladite partie inférieure (28).

8. Construction de cartouche selon l'une quelconque des revendications précédentes, dans laquelle, dans ladite partie inférieure (28), ladite eau chaude et ladite eau froide sont mélangées pour fournir un écoulement d'eau mélangée.

9. Construction de cartouche selon l'une quelconque des revendications précédentes, dans laquelle ladite eau mélangée traverse ledit disque en céramique fixe (15), ladite plaque supérieure (17), ladite plaque centrale (24), ladite plaque inférieure (26) et ladite partie inférieure (28), sortant ainsi de ladite sortie d'eau mélangée (S).

10. Construction de cartouche selon l'une quelconque des revendications précédentes, dans laquelle le mouvement rotatif dudit levier de commande autour dudit premier axe (P) fournit, par le biais dudit joint à cardan, un mouvement rotatif sur ledit dispositif de réglage (5) autour dudit premier axe (P), le mouvement rotatif du levier (4) autour dudit premier axe (P) étant tel qu'il n'interfère pas avec le mouvement rotatif du support de levier (12), et ne génère aucun déplacement du disque en céramique mobile (14).

11. Construction de cartouche selon l'une quelconque des revendications précédentes, dans laquelle le mouvement rotatif dudit élément de support de levier (12) autour dudit deuxième axe (Q) ne provoque pas la rotation dudit élément de réglage (5), de telle sorte que lesdits mouvements d'ouverture-fermeture et lesdits mouvements de réglage sont totalement indépendants les uns des autres.
